# EUROPEAN PATENT APPLICATION

(11) **EP 2 485 449 A1**
(43) Date of publication of application: **08.08.2012**
(21) Application number: 10788651.7
(22) Date of filing: 25.03.2010
(51) Int. Cl.: H04L 29/06, H04L 12/66, H04L 12/18

(54) **METHOD AND APPARATUS FOR DETERMINING GATEWAY AND METHOD AND SYSTEM FOR SENDING MESSAGE**

(30) Priority: 30.09.2009 CN 200910179925
(71) Applicant: ZTE Corporation, Shenzhen, Guangdong 518057 (CN)
(72) Inventor: HUANG, Xiang, Shenzhen Guangdong 518057 (CN)
(74) Representative: Howson, Richard G.B.
(86) International application number: PCT/CN2010/071306
(87) International publication number: WO 2010/145255

(57) **Abstract**

The present disclosure discloses a method for determining a multimedia message gateway, comprising: receiving a message of querying a multimedia message gateway sent by a value-added service server after the value-added service server generates a multimedia message; acquiring the service processing situation or resource occupation situation of each multimedia message gateway, determining the multimedia message gateway with the strongest service processing capacity currently according to the service processing situation, or determining the multimedia message gateway with the most residual resource according to the resource occupation situation; and using the determined multimedia message gateway as the multimedia message gateway for sending the multimedia message. The disclosure further discloses a method for sending a multimedia message, an apparatus for determining a multimedia message gateway and a system for sending a multimedia message. The disclosure can solve the problem of traffic imbalance of each multimedia message gateway caused by presetting multimedia message gateways in the prior art.

## Description

### TECHNICAL FIELD

The disclosure relates to communications, in particular to a method and an apparatus for determining a multimedia message gateway, further to a method and a system for sending a multimedia message.

### BACKGROUND

At present, multimedia message terminals are widespread, services of Value-Added Service Providers (VASP) are expanded greatly, correspondingly, traffics of multimedia message services (such as, multimedia message, color ring back tone and the like) increase fast, wherein multimedia messages are generated by a value-added service server, and each value-added service provider has a multiple of value-added service servers.

In order to meet the needs of multimedia message services with fast increased traffics, each operator has established a large number of multimedia message gateways. However, for value-added service servers providing multimedia messages, each operator adopts a method of presetting multimedia message gateways, that is, each value-added service server has to send multimedia messages provided by the value-added service server through the preset multimedia message gateway; otherwise, the multimedia messages cannot be sent.

During practical application, presetting multimedia message gateways may bring many disadvantages, for example, traffic imbalance may be caused, at a certain moment, services on some multimedia message gateways have exceeded the processing capacities of the multimedia message gateways per se, which results in that multimedia messages beyond the processing capacities of the multimedia message gateways per se cannot be sent in time or fail to be sent due to overtime to thereby influence user experience; while at the same time, some multimedia message gateways may have little traffic and even be in an idle state, which wastes network resources occupied by these multimedia message gateways and fails to bring better benefits to the investment of an operator.

Further, when an operator establishes a new multimedia message gateway, for a value-added service server that sends multimedia messages through the new multimedia message gateway, data on the value-added service server has to be modified by the operator and the initial multimedia message gateway has to be modified to be the new multimedia message gateway, so that the workload of the operator is increased.

Also, when a fault occurs in a multimedia message gateway, the multimedia message gateway will fail to send multimedia messages. In order to guarantee the service stability, services on the multimedia message gateway have to be switched to other multimedia message gateways without fault, for which the operator also need to modify data on the value-added service server; otherwise, the value-added service server will still send the generated multimedia messages to the multimedia message gateway in fault. The above modification may increase the workload of an operator and the fault handling time, such that the user experience will be influenced.

### SUMMARY

The object of the present disclosure is to provide a method for determining a multimedia message gateway to solve the problem of traffic imbalance of each multimedia message gateway caused by presetting multimedia message gateways in the prior art.

The above method of the present disclosure comprises:
receiving a message of querying a multimedia message gateway sent by a value-added service server after the value-added service server generates a multimedia message; and
acquiring service processing situation or resource occupation situation of each multimedia message gateway, determining a multimedia message gateway with a strongest service processing capacity currently according to the service processing situation, or determining a multimedia message gateway with a most residual resource according to the resource occupation situation, and using the determined multimedia message gateway as a multimedia message gateway for sending the multimedia message.

One embodiment of the disclosure provides a method for sending a multimedia message to solve the problem of traffic imbalance of each multimedia message gateway caused by presetting multimedia message gateways in the prior art.

The above method of the present disclosure comprises:
receiving a message of querying a multimedia message gateway sent by a value-added service server after the value-added service server generates a multimedia message;
acquiring service processing situation or resource occupation situation of each multimedia message gateway, determining a multimedia message gateway with a strongest service processing capacity currently according to the service processing situation, or determining a multimedia message gateway with a most residual resource according to the resource occupation situation;
sending a corresponding identifier of the determined multimedia message gateway to the value-added service server; and
sending, by the value-added service server, the multimedia message to a multimedia message gateway corresponding to the identifier.

Another embodiment of the disclosure further provides an apparatus for determining a multimedia message gateway to solve the problem of traffic imbalance of each multimedia message gateway caused by presetting multimedia message gateways in the prior art.

The above apparatus comprises:
a receiving unit configured to receive a message of querying a multimedia message gateway sent by a value-added service server after the value-added service server generates a multimedia message; and
a determining unit configured to acquire the service processing situation or resource occupation situation of each multimedia message gateway, determining a multimedia message gateway with a strongest service processing capacity currently according to the service processing situation, or determining a multimedia message gateway with a most residual resource according to the resource occupation situation, and using the determined multimedia message gateway as a multimedia message gateway for sending the multimedia message.

Another embodiment of the disclosure further provides a system for sending a multimedia message to solve the problem of traffic imbalance of each multimedia message gateway caused by presetting multimedia message gateways in the prior art.

The above system comprises a multimedia message gateway for sending a multimedia message, and further comprises a value-added service server and an apparatus for determining a multimedia message gateway;
the value-added service server is configured to send a message of querying a multimedia message gateway to the apparatus for determining the multimedia message gateway after generating a multimedia message, receiving a corresponding identifier of the multimedia message gateway for sending the multimedia message from the apparatus for determining the multimedia message gateway, and sending the multimedia message to the multimedia message gateway corresponding to the identifier; and
the apparatus for determining the multimedia message gateway is configured to acquire service processing situation or resource occupation situation of each multimedia message gateway, determining a multimedia message gateway with a strongest service processing capacity currently according to the service processing situation, or determining a multimedia message gateway with a most residual resource according to the resource occupation situation, and sending the corresponding identifier of the determined multimedia message gateway to the value-added service server.

Different from the prior art in which a value-added service server sends a multimedia message through a preset multimedia message gateway, in the embodiment of the disclosure, after receiving a message of querying a multimedia message gateway sent by a value-added service server, the service processing situation or resource occupation situation of each multimedia message gateway is acquired, the multimedia message gateway with the strongest service processing capacity currently is determined according to the service processing situation, or the multimedia message gateway with the most residual resource is determined according to the resource occupation situation, and the determined multimedia message gateway is used as the multimedia message gateway for sending the multimedia message, so that some multimedia message gateways whose traffics have exceeded their own processing capacities can be avoided being selected to send the multimedia message so as to send the multimedia message in time, and the user experience can be improved; meanwhile, the processing capacity and occupied resource of each multimedia message gateway can be fully utilized, waste of resource is reduced, and better benefits are brought to the investment of an operator.

Further, through a heartbeat message, a multimedia message gateway that is in fault currently can be determined and a new multimedia message gateway established by an operator can be learned, and further the multimedia message gateway for sending the generated multimedia message service can be directly determined according to the service situations of the multimedia message gateways without fault while it does not need to wait an operator to modify data on the value-added service server, so that the multimedia message can be sent in time, the fault handling time is shortened, the workload of an operator is decreased, and the user experience is improved.

### BRIEF DESCRIPTION OF THE DRAWING

Fig. 1 shows a flowchart of a method for determining a multimedia message gateway in the embodiment of the disclosure;
Fig. 2 shows a flowchart of acquiring the service processing situation or resource occupation situation of each multimedia message gateway in the embodiment of the disclosure;
Fig. 3 shows a flowchart of a method for sending a multimedia message in the embodiment of the disclosure;
Figs. 4 and 5 show a structural diagram of an apparatus for determining a multimedia message gateway in the embodiment of the disclosure;
Fig. 6 shows a flowchart of a process of sending a multimedia message in the embodiment of the disclosure; and
Fig. 7 shows a structural diagram of a system for sending a multimedia message in the embodiment of the disclosure.

### DETAILED DESCRIPTION

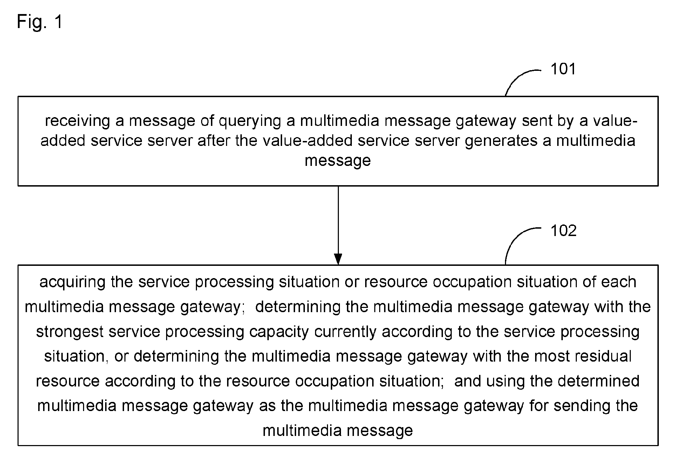

The embodiment of the disclosure provides a method for determining a multimedia message gateway to solve the problem of traffic imbalance of each multimedia message gateway caused by presetting multimedia message gateways in the prior art. The specific processing flow is shown in Fig. 1, comprising the following steps.
Step 101: Receiving a message of querying a multimedia message gateway sent by a value-added service server after the value-added service server generates a multimedia message; and
Step 102: acquiring service processing situation or resource occupation situation of each multimedia message gateway, determining a multimedia message gateway with a strongest service processing capacity currently according to the service processing situation, or determining a multimedia message gateway with a most residual resource according to the resource occupation situation, and using the determined multimedia message gateway as a multimedia message gateway for sending the multimedia message.

During implementation, after determining a multimedia message gateway, the corresponding identifier of the determined multimedia message gateway is sent to the value-added service server.

During implementation, there may be a multiple types of identifiers of the multimedia message gateway, for example, a preferred implementation mode is selecting a Uniform Resource Locator (URL) as the identifier of the multimedia message gateway; of course, other identifiers may also be selected during specific implementation according to specific situations.

As shown in Fig. 1, when Step 101 is implemented, different from presetting a multimedia message gateway for each value-added service server in the prior art, in Step 101, there is no preset relationship between a value-added service server and a multimedia message gateway, the value-added service server sends a message of querying the multimedia message after generating a multimedia message to inquire a multimedia message gateway that can be used for sending the generated multimedia message.

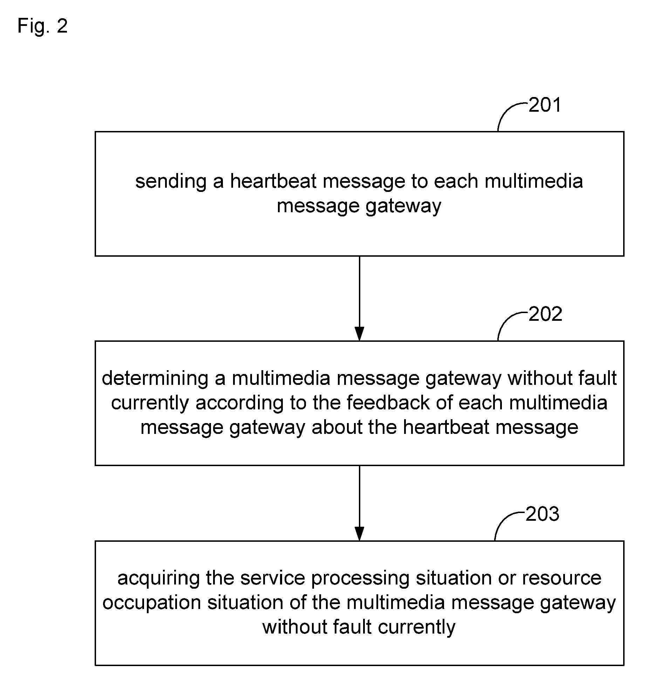

As shown in Fig. 1, when Step 102 is implemented, the service processing situation or resource occupation situation of each multimedia message gateway is acquired, during specific implementation, some multimedia message gateways perhaps cannot normally work due to faults occurs in the multimedia message gateways, and a heartbeat message can be utilized to determine a multimedia message gateway without fault currently; the specific processing flow is shown in Fig. 2.
Step 201: Sending a heartbeat message to each multimedia message gateway;
Step 202: Determining a multimedia message gateway without fault currently according to the feedback of each multimedia message gateway about the heartbeat message; and
Step 203: Acquiring the service processing situation or resource occupation situation of the multimedia message gateway without fault currently.

As shown in Fig. 2, when Step 202 is implemented, the multimedia message gateway without fault will give corresponding feedback after receiving the heartbeat message, for example, sending a feedback message to the value-added service server; while the multimedia message gateway in fault will make no response after receiving the heartbeat message.

In order to ensure that the multimedia message gateway in fault and the multimedia message gateway without fault can be distinguished in time and accurately, during implementation, a method of sending heartbeat messages periodically can be employed, wherein the specific length of period can be determined according to specific situation.

As shown in Fig. 2, when Step 203 is implemented, the service processing situation or resource occupation situation of the multimedia message gateway without fault currently is acquired since the multimedia message gateway in fault is unable to send a multimedia message; therefore, hereafter, it just needs to select a multimedia message gateway for sending the generated multimedia message according to the service processing situation or resource occupation situation of the multimedia message gateway without fault after a multimedia message gateway without fault is determined.

As shown in Fig. 1, when Step 102 is implemented, there can be many methods for determining a multimedia message gateway for sending the generated multimedia message, a preferred implementation mode is:
acquiring the service processing time delay of the multimedia message gateway without fault currently, and determining the multimedia message gateway with the shortest service processing time delay.

Of course, besides the above implementation mode, there are other preferred implementation modes, for example:
acquiring the maximum traffic and current traffic of each multimedia message gateway without fault currently, and determining the multimedia message gateway with the maximum residual traffic according to the residual traffic obtained from the difference between the maximum traffic and the current traffic.

Also for example:
acquiring the maximum throughput and current throughput of the multimedia message gateway without fault currently, and determining the multimedia message gateway with the maximum residual throughput according to the residual throughput obtained from the difference between the maximum throughput and the current throughput.

Besides the implementation modes listed above, there can also be other implementation modes as long as the multimedia message gateway for serving the multimedia message can be determined.

During implementation, the service processing situations or resource occupation situations of some multimedia message gateways may be same, meanwhile, the above multiple preferred methods for determining a multimedia message gateway can be combined to get a more preferred selection, for example:
when the service processing time delays of at least two multimedia message gateways are equal, acquiring the residual traffics or residual throughputs of the at least two multimedia message gateways and selecting the multimedia message gateway with the maximum residual traffic or residual throughput.

Also for example:
when the residual traffics of at least two multimedia message gateways are equal, acquiring the service processing time delays of the at least two multimedia message gateways and selecting the multimedia message gateway with the shortest service processing time delay, or acquiring the residual throughputs of the at least two multimedia message gateways and selecting the multimedia message gateway with the maximum residual throughput.

Also for example:
when the residual throughputs of at least two multimedia message gateways are equal, acquiring the service processing time delays of the at least two multimedia message gateways and selecting the multimedia message gateway with the shortest service processing time delay, or acquiring the residual traffics of the at least two multimedia message gateways and selecting the multimedia message gateway with the maximum residual traffic.

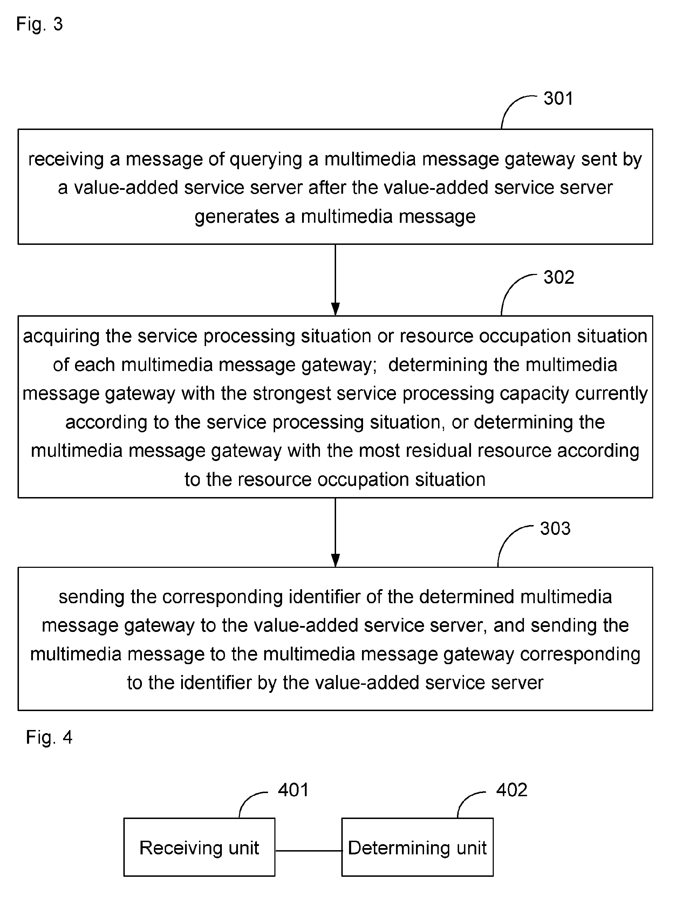

Based on a same conception, the embodiment of the disclosure further provides a method for sending a multimedia message, with specific processing flow as shown in Fig. 3. The method comprises:
Step 301: receiving a message of querying a multimedia message gateway sent by a_value-added service server after the value-added service server generates a multimedia message;
Step 302: acquiring the service processing situation or resource occupation situation of each multimedia message gateway, and determining the multimedia message gateway with the strongest service processing capacity currently according to the service processing situation, or determining the multimedia message gateway with the most residual resource according to the resource occupation situation; and
Step 303: sending the corresponding identifier of the determined multimedia message gateway to the value-added service server; and sending, by the value-added service server, the multimedia message to the multimedia message gateway corresponding to the identifier.

Based on a same conception, the embodiment of the disclosure further provides an apparatus for determining a multimedia message gateway, with specific structure as shown in Fig. 4. The apparatus comprises:
a receiving unit 401 configured to receive a message of querying a multimedia message gateway sent by a value-added service server after the value-added service server generates a multimedia message; and
a determining unit 402 configured to acquire the service processing situation or resource occupation situation of each multimedia message gateway, determining the multimedia message gateway with the strongest service processing capacity currently according to the service processing situation, or determining the multimedia message gateway with the most residual resource according to the resource occupation situation, and using the determined multimedia message gateway as the multimedia message gateway for sending the multimedia message.

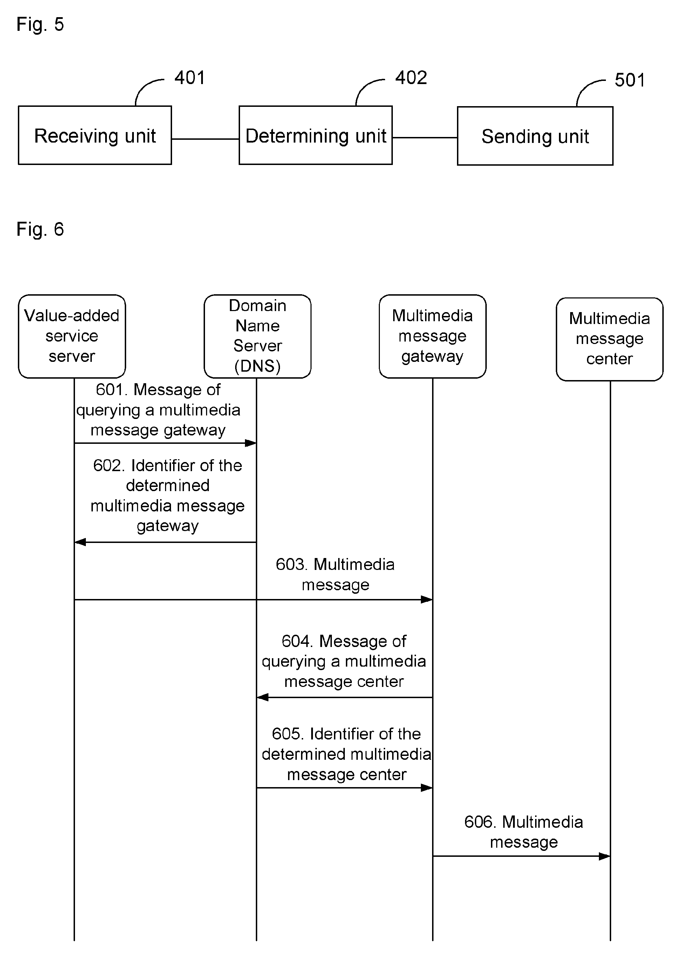

In one embodiment, as shown in Fig. 5, the apparatus for determining a multimedia message gateway further comprises a sending unit 501 configured to send the corresponding identifier of the determined multimedia message gateway to the value-added service server.

In one embodiment, the apparatus for determining a multimedia message gateway can be integrated in a Domain Name Server (DNS), or in other devices or apparatuses as long as the service processing situation or resource occupation situation of each multimedia message gateway can be determined after being integrated, wherein which device or apparatus is selected to perform integration may be determined according to actual situation.

Here, DNS will be taken as example to explain a process of sending a multimedia message. Specific flow is shown in Fig. 6.
Step 601: Sending to a DNS a message of querying the multimedia message by a value-added service server after the value-added service server generates a multimedia message;
Step 602: acquiring the service processing situation or resource occupation situation of each multimedia message gateway by the DNS, determining a multimedia message gateway for sending the generated multimedia message according to the service processing situation or resource occupation situation determined, and sending the corresponding identifier of the determined multimedia message gateway to the value-added service server; and
Step 603: sending the multimedia message to the multimedia message gateway corresponding to the identifier by the value-added service server.
   As only the multimedia message gateway corresponding to the identifier appears hereafter, for convenient description, the multimedia message gateway corresponding to the identifier is briefly referred to as multimedia message gateway, and the multimedia message gateway corresponding to the identifier determined may also be replaced with multimedia message gateway in Fig.6;
Step 604: Sending a message of querying a multimedia message center to the DNS by the multimedia message gateway;
Step 605: sending an identifier of the multimedia message center by the DNS to the multimedia message gateway;
   as only the multimedia message center corresponding to the identifier appears hereafter, for convenient description, the multimedia message center corresponding to the identifier is briefly referred to as multimedia message center, and the multimedia message center corresponding to the identifier is also replaced with multimedia message center; and
Step 606: sending the multimedia message to the multimedia message center by the multimedia message gateway.

The above flow only takes DNS as example for explaining, during practical application, any devices or apparatuses integrated with the apparatus for determining a multimedia message gateway can be selected according to specific situation.

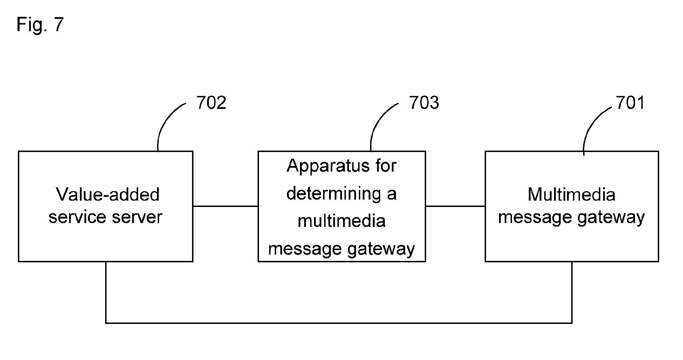

Based on a same conception, the embodiment of the disclosure further provides a system for sending a multimedia message, as shown in Fig. 7, comprising a multimedia message gateway 701 for sending a multimedia message, and further comprising a value-added service server 702 and an apparatus 703 for determining a multimedia message gateway.

The value-added service server 702 is configured to send a message of querying a multimedia message gateway to the apparatus 703 for determining a multimedia message gateway after generating a multimedia message, receive the corresponding identifier of the multimedia message gateway 701 for sending the multimedia message from the apparatus 703 for determining a multimedia gateway, and send the multimedia message to the multimedia message gateway 701 corresponding to the identifier.

The apparatus 703 for determining a multimedia message gateway is configured to acquire the service processing situation or resource occupation situation of each multimedia message gateway, determine the multimedia message gateway with the strongest service processing capacity currently according to the service processing situation, or determine the multimedia message gateway with the most residual resource according to the resource occupation situation, and send the corresponding identifier of the determined multimedia message gateway 701 to the value-added service server 702.

Different from the prior art in which the value-added service server sends a multimedia message through a preset multimedia message gateway, in the embodiment of the disclosure, after receiving a message of querying a multimedia message gateway sent by the value-added service server, the service processing situation or resource occupation situation of each multimedia message gateway is acquired, the multimedia message gateway with the strongest service processing capacity currently is determined according to the service processing situation, or the multimedia message gateway with the most residual resource is determined according to the resource occupation situation, and the determined multimedia message gateway is used as the multimedia message gateway for sending the multimedia message, so that some multimedia message gateways whose traffics have exceeded their own processing capacities can be avoided being selected to send the multimedia message so as to send the multimedia message in time, and the user experience can be improved; meanwhile, the processing capacity and occupied resource of each multimedia message gateway can be fully utilized, waste of resource is reduced, and better benefits are brought to the investment of an operator.

Further, through a heartbeat message, a multimedia message gateway that is in fault currently can be determined and a new multimedia message gateway established by an operator can be learned, and further the multimedia message gateway for sending the generated multimedia message service can be directly determined according to the service situations of the multimedia message gateways without fault while it does not need to wait an operator to modify data on the value-added service server, so that the multimedia message can be sent in time, fault handling time is shortened, the workload of an operator is decreased, and user experience is improved.

Obviously, those skilled in the art can make various modifications and changes according to the disclosure within the spirit and scope of the disclosure. Thus, if these modifications and changes of the disclosure is within the scope of the claims of the disclosure and equivalent technologies thereof, the disclosure further is intended to include these modifications and changes.

## Claims

1. A method for determining a multimedia message gateway, comprising:
receiving a message of querying a multimedia message gateway sent by a value-added service server after the value-added service server generates a multimedia message; and
acquiring service processing situation or resource occupation situation of each multimedia message gateway, determining a multimedia message gateway with a strongest service processing capacity currently according to the service processing situation, or determining a multimedia message gateway with a most residual resource according to the resource occupation situation, and using the determined multimedia message gateway as a multimedia message gateway for sending the multimedia message.

2. The method according to claim 1, further comprising:
sending a corresponding identifier of the determined multimedia message gateway to the value-added service server.

3. The method according to claim 1 or 2, wherein the step of acquiring the service processing situation or resource occupation situation of each multimedia message gateway comprises:
sending a heartbeat message to each multimedia message gateway;
determining multimedia message gateways without fault currently according to a feedback of each multimedia message gateway about the heartbeat message; and
acquiring service processing situation or resources occupation situation of the multimedia message gateway without fault currently.

4. The method according to claim 3, wherein the step of acquiring the service processing situation of each multimedia message gateway and determining the multimedia message gateway with the strongest service processing capacity currently according to the service processing situation comprises:
acquiring service processing time delays of the multimedia message gateways without fault currently and determining a multimedia message gateway with a shortest service processing time delay; or
acquiring a maximum traffic and a current traffic of each multimedia message gateway without fault currently, and determining a multimedia message gateway with a maximum residual traffic according to a residual traffic obtained from a difference between the maximum traffic and the current traffic; or
acquiring a maximum throughput and a current throughput of each multimedia message gateway without fault currently, and determining a multimedia message gateway with a maximum residual throughput according to a residual throughput obtained from a difference between the maximum throughput and the current throughput.

5. The method according to claim 4, wherein:
when service processing time delays of at least two multimedia message gateways are equal, acquiring residual traffics or residual throughputs of the at least two multimedia message gateways and selecting a multimedia message gateway with a maximum residual traffic or residual throughput;
when residual traffics of at least two multimedia message gateways are equal, acquiring service processing time delays of the at least two multimedia message gateways and selecting the multimedia message gateway with a shortest service processing time delay, or acquiring residual throughputs of the at least two multimedia message gateways and selecting the multimedia message gateway with a maximum residual throughput; and
when residual throughputs of at least two multimedia message gateways are equal, acquiring service processing time delays of the at least two multimedia message gateways and selecting the multimedia message gateway with a shortest service processing time delay, or acquiring residual traffics of the at least two multimedia message gateways and selecting a multimedia message gateway with a maximum residual traffic.

6. A method for sending a multimedia message, comprising:
receiving a message of querying a multimedia message gateway sent by a value-added service server after the value-added service server generates a multimedia message;
acquiring service processing situation or resource occupation situation of each multimedia message gateway, determining a multimedia message gateway with a strongest service processing capacity currently according to the service processing situation, or determining a multimedia message gateway with a most residual resource according to the resource occupation situation;
sending a corresponding identifier of the determined multimedia message gateway to the value-added service server; and
sending, by the value-added service server, the multimedia message to a multimedia message gateway corresponding to the identifier.

7. An apparatus for determining a multimedia message gateway, comprising:
a receiving unit configured to receive a message of querying a multimedia message gateway sent by a value-added service server after the value-added service server generates a multimedia message; and
a determining unit configured to acquire service processing situation or resource occupation situation of each multimedia message gateway, determining a multimedia message gateway with a strongest service processing capacity currently according to the service processing situation, or determining a multimedia message gateway with a most residual resource according to the resource occupation situation, and using the determined multimedia message gateway as a multimedia message gateway for sending the multimedia message.

8. The apparatus according to claim 7, further comprising:
a sending unit configured to send a corresponding identifier of the determined multimedia message gateway to the value-added service server.

9. The apparatus according to claim 7 or 8, being integrated in a Domain Name Server (DNS).

10. A system for sending a multimedia message, which comprise a multimedia message gateway for sending a multimedia message, further comprising a value-added service server and an apparatus for determining the multimedia message gateway, wherein:
the value-added service server is configured to send a message of querying a multimedia message gateway to the apparatus for determining the multimedia message gateway after generating a multimedia message, receiving a corresponding identifier of the multimedia message gateway for sending the multimedia message from the apparatus for determining the multimedia message gateway, and sending the multimedia message to the multimedia message gateway corresponding to the identifier; and
the apparatus for determining the multimedia message gateway is configured to acquire service processing situation or resource occupation situation of each multimedia message gateway, determining a multimedia message gateway with a strongest service processing capacity currently according to the service processing situation, or determining a multimedia message gateway with a most residual resource according to the resource occupation situation, and sending a corresponding identifier of the determined multimedia message gateway to the value-added service server.
